# EUROPEAN PATENT APPLICATION

(11) **EP 4 775 352 A1**
(43) Date of publication of application: **15.07.2026**
(21) Application number: 26151051.5
(22) Date of filing: 09.01.2026
(51) Int. Cl.: B25B 5/00, E04B 1/58

(54) **UNIVERSAL MODULAR STRUCTURE AND WORKING STRUCTURE FORMED BY SAME**

(30) Priority: 09.01.2025 ES 202530010
(71) Applicant: Misati, S.L., 08960 San Just Desvern Barcelona (ES)
(72) Inventor: SARABIA TRILLA, Miquel, 08960 Sant Just Desvern (ES)
(74) Representative: Ponti & Partners, S.L.P

(57) **Abstract**

The present invention relates to a universal modular structure formed by various elements of identical or similar configuration that are coupled together to form a scalable structure assembly according to the design requirements. The modular structure is configured from closed section tubular profiles, with their hollow and accessible interior having multiple fastening holes and coupling and/or through holes, standardised and compatible with the fastening and joining elements between tubular profiles of the same universal modular structure. The invention also relates to working structures comprising universal modular structures as above for forming an assembly with functional applications for support of devices, tools, equipment or the like.

## Description

The present invention relates to a universal industrial modular structure of high rigidity formed by various elements of identical or similar configuration that are coupled together to form a scalable structure assembly according to design requirements, which allows its use in multiple applications such as the support of devices, equipment, work benches and/or directly parts, as well as any other function that needs a support structure intended to withstand high static and dynamic loads, particularly in environments with vibrations, such as stamping lines, presses, transfer systems, robotic cells and heavy industrial machinery.

The invention also relates to working structures having multiple applications as benches or the like, comprising universal industrial modular structures of high rigidity, such as those described above, to form an assembly with functional applications supporting devices, tooling, equipment or the like.

### Background of the invention

In the state of the art, different types of working structures made in structural tubes, oxy-cutting plates or the like are known, which require a laborious and specialised design, as well as a production through expensive processes both in specialised labour and in productive times, since these materials have to be welded, sanded, machined and final coatings and protections of the surfaces of the formed structure assembly.

In this example of structures that form, among others, work benches, a subsequent machining is necessary for the fastening of the elements/assemblies to be supported. This makes it necessary in many cases to use special parts designed specifically for the specific application that it has in a specific design or project, which ends up creating a bench-type structure assembly that is not recoverable for a subsequent project, so that all the investment and materials are not recoverable in a significant proportion and end up being mostly waste from which a significant economic return is not expected.

All this specific design and specialised work entail a considerable cost of design and production of this type of structures, as well as a delivery time that in most cases can exceed 2 or 3 months, in addition to needing in this process the management and coordination of different suppliers for the final configuration of the product.

These problems clearly associated with the bench-type structures, can be applied in the same way to other types of structures such as those used in the production lines, support structures of equipment/machinery, structures of conveyors or tools in general, which especially need a specific configuration so that the equipment, devices, machines, tools or the like that support them, are in a correct, stable and safe position, allowing the passage and connections of supplies for the operation thereof.

On the other hand, aluminium profiles for industrial modular assemblies are known in the state of the art, such as shelving or similar structures, used for their versatility and ease of assembly. The aluminium profiles of these modular structures are extruded aluminium profiles that have longitudinal holes distributed along their entire length, for fixing with other homologous modular elements by means of screws, and thus creating lightweight modular structures adaptable to the measurements and configurations of a specific project.

These extruded aluminium profiles are thin-walled, typically comprised between 2 and 4 mm, being assembled between them by means of screw joints supported in the profile's own grooves. Although these structures are suitable for positioning applications, enclosures or light loads, they have important limitations when subjected to dynamic loads, vibrations or alternating stresses, without structural capacity to absorb stresses and movements of the elements they support. The low intrinsic rigidity of the material and the reduced thickness of the wall, the discontinuity of the resistant section due to the grooves and the limited prestressing capacity of the joints, cause appreciable deformations, micro-slips in the joints and a progressive loss of structural stability under dynamic conditions.

All this makes extruded aluminium structures unsuitable for demanding industrial applications, with welded steel structures traditionally reserved for such environments, with the consequent loss of modularity and flexibility.

On the other hand, these structures lack options for integrating tools, equipment, devices or the like, and also do not comprise means for integrating pipelines and supply feeding facilities at desired points for said tools, equipment, devices or the like.

In this way, it is necessary to obtain an alternative structure to the traditional structures joined by welding and to the light modular structures based on extruded aluminium profiles, which minimises the use of different elements, allows a modular design adaptable to different designs, integration of facilities and supplies and final configurations, being recoverable through their disassembly, expandable, modifiable and reusable in its almost totality or large majority without significant loss of structural rigidity and without limitations of stability and vibratory behaviour, allowing it to be constituted with a contained cost in its production and allowing a self-assembly, minimising the need for intervention of labour and external professional actions, thus achieving a minimisation of costs and effective times of its final execution, achieving a modular structure capable of withstanding high dynamic loads and vibrations, maintaining a high and stable overall rigidity over time, suitable for demanding industrial use without resorting to permanent welded joints.

### Description of the invention

The aim of the present invention is to provide a universal modular structure, as well as a working structure formed by said universal modular structure, having the advantages that will be described below.

In accordance with this objective, according to a first aspect, the present invention provides a universal modular structure, which comprises tubular profiles which are configured to be joined together to form said universal modular structure, as well as to receive the coupling and fixing of tools, devices, equipment or the like.

Advantageously, the present invention is based on the fact that each tubular profile is constituted by a tubular part of closed section, with its hollow interior and accessible at least from the ends of said tubular profile, comprising at least:
- multiple fastening holes in at least one of the faces of the tubular profile configured for receiving joining means between tubular profiles and for the fixing of external elements such as tooling, tools, equipment and/or the like; and
- one or more coupling and/or through holes of installations on at least one of the faces of the tubular profile.

Also advantageously, this universal modular structure comprises fastening and joining elements between contiguous tubular profiles, wherein these fastening and joining elements comprise fastening holes compatible with the fastening holes of the tubular profile and positioned said fastening holes in the fastening and joining element such that, when a fastening and joining element is placed on a portion of each of the contiguous tubular profiles, the fastening holes of the fastening and joining element are coincident in turn in one or more fastening holes of each of the contiguous tubular profiles to be joined.

This configuration of the universal modular structure based on profiles such as those indicated and with the previous fastening and joining elements, allows a configuration of a structural assembly in an easy and simple way, being able to be self-assembled without the necessary intervention of suppliers/professionals in its final assembly and allowing the recovery of the different parts of the assembly for different subsequent project configurations.

The tubular parts that form the tubular profiles are hollow by way of passages to be able to house pipes, wiring or the like and that, by means of the coupling and/or through holes of installations that are arranged on at least one of the faces of the tubular profile, connections, ducts or the like that can be coupled to the universal modular structure at a desired point can be integrated, keeping the corresponding pipes, wiring, channelling and/or the like ordered and protected inside.

This allows a reduction in the execution times of the final structure and the cost of materials and cost of professionals who must adapt, correct, machine, etc., the different parts of the structure. Likewise, a reduction in waste and reuse of the different elements that constitute it is achieved in a very high percentage, in some cases becoming complete, being able to amortise the investment in subsequent projects.

Preferably, the fastening holes of the tubular profiles comprise a threaded bore in their open perimeter surface, this threaded bore configured to receive a screw or the like and directly perform the tightening of the screw in said fastening hole.

This configuration, joined by means of screws with structural face-to-face contact, allows the direct tightening of the screws used on the tubular profile and, in this way, the installation of the corresponding nut on the inside of the tubular profile is not necessary, achieving anchors of the screws in the tubular profile that is simpler and with the consequent saving of assembly times. In order for the threaded bore of the fastening hole to allow the screw to be fastened safely and effectively, a greater thickness of the walls of the tubular profile where the fastening holes are located with the threaded bore has been made. Preferably, and for this technical effect of direct fixing of the screws on the tubular profile to be more effective, it is considered that the thickness of the threaded bore, and therefore of the profile containing it, must be at least 6 mm, preferably having, but not limited to, threaded bore thicknesses of between 6 and 8 mm. These holes are configured to preferably receive metric 10 screws.

These joining means, with face-to-face contact, not in a groove as in the case of extruded aluminium profile structures, allow safe and effective joints under severe dynamic loads, maintaining torque and eliminating micro-slips.

According to a preferred embodiment, the tubular profiles forming the universal modular structure are configured with a cross-section of rectangular or square geometry. This configuration allows to provide a geometry structurally resistant to the stresses that can be generated in the mounted assembly during its use with the equipment and devices that are supported and that are anchored and, in addition, it allows an assembly by means of fastening and joining elements that do not need a special geometric configuration, and they can be straight plates or plates at 90°. More preferably, there are profiles with a large closed section, with dimensions greater than 100x200 mm. Alternatively, other tubular profile geometries are possible.

Also preferably, whether the configuration of the tubular profile has cross-section of rectangular or square geometry, or of different geometry from these, the tubular profiles forming the universal modular structure are formed by cold-rolled and welded metal material according to their closed section.

In a further preferred embodiment, the tubular profiles forming the universal modular structure are formed by metal material of the structural steel type. This allows a configuration capable of withstanding considerable weight loads and, very importantly, stresses generated by the devices, equipment, tools and any moving element it contains, giving stability and safety to the mounting assembly regardless of the conventional applications described. This structural steel that is used is preferably S-355 steel, although other materials with similar conditions, behaviour and physical properties or adapted to their final use in the defined project may be used, without limiting the invention to this preferred material. The thickness of this profile, of this material and configured in this way, is preferably greater than 6 mm, as indicated in the description of the threaded bore of the screw joints.

This preferred configuration that synergistically incorporates the modular configuration of closed-section tubular profiles, preferably rectangular/square, wherein the profiles are made of structural steel with a thickness of at least 6 mm and that define a closed, laminated and welded section, with joining holes with threaded bore allowing a face-to-face contact of the screws, in addition to other possible complementary technical characteristics, advantageously and differentially with respect to the state of the art, corresponding to traditional structures joined by welding and to lightweight modular structures based on extruded aluminium profiles, to have a modular structure without loss of rigidity, removable and reconfigurable, capable of withstanding high dynamic loads and vibrations, maintaining a high and stable overall rigidity over time, suitable for demanding industrial use without resorting to permanent welded joints.

**In** comparison, while the extruded aluminium profile structures have a low elastic modulus, use thicknesses less than 4 mm, with sections of the profile not completely closed on some occasions, screw joints that thread exclusively on the groove and with a flexible vibratory behaviour, and a limited dynamic application, the high rigidity structure of the invention has a high elastic modulus, a thickness preferably of at least 6 mm, a totally closed section, comprising threaded bore joint holes having structural face-to-face contact, thus obtaining a rigid vibratory behaviour and allowing an optimal dynamic application.

According to a possible embodiment of the invention, in addition to any of the previous embodiments, the fastening holes that are located on the one or more faces of the tubular profile are spaced apart from each other by a first identical distance along the length and width of each face of the tubular profile where they are positioned. With respect to the fastening holes that are located contiguous to the border and/or edge of the tubular profile, they are at a second distance from said border or edge that is half of the first distance, the fastening holes being configured located on respective faces of two contiguous tubular profiles that form a same plane, at the same distance as the first separation distance within the same face of the same tubular profile.

This configuration of the fastening holes of the tubular profiles allows standardising the fastening and joining elements and to avoid costs in special joining parts.

With regard to the characteristic defining the spacing between the fastening holes themselves of a same face of a tubular profile, it is to be understood that the spacing between them by a first identical distance along the length and width of each face of the tubular profile where they are positioned, means that the spacing between fastening holes is the same on the longitudinal axis, i.e. the length of the tubular profile, as well as on the transversal axis, i.e. the width of the tubular profile. Preferably, the first distance is set to 50 mm, thus forming a regular 50 mm by 50 mm quadrature between fastening holes of the same face and the fastening holes being located contiguous to the border or edge of the tubular profile, at a second distance of 25 mm from said borders or edges of the tubular profile. Edge should be understood, in the case of rounded or chamfered borders of the tubular profile, the imaginary cutting edge between the planes that form two contiguous faces of the tubular profile.

According to another possible embodiment, compatible with any of the preceding embodiments, at least one of the faces of at least one tubular profile forming the universal modular structure comprises an opening by way of a window configured to access the hollow interior of the tubular profile on a portion of one of the faces of the tubular profile.

These intermediate openings allow manual access, with pipes and/or tools to the interior of the hollow tubular profile, so that in portions of considerable length it allows the execution of manipulations and/or introduction of pipes or the like from points other than the ends, facilitating both the assembly and the maintenance of the final assembly that forms the universal modular structure.

Optionally and according to any of the embodiments above, the coupling and/or through holes of installations are located along all but one face of the tubular profile, being equally spaced from each other within the same face. At least the fastening holes and openings by way of windows are installed on the side free of coupling and/or through holes of installations.

With regard to the fastening and joining elements between contiguous profiles, according to a preferred embodiment of the invention, these fastening and joining elements are formed by a plate or the like with a fixing surface in a common fixing plane for the two tubular profiles to be joined and thus perform the joining through fastening holes in these fastening elements to the two tubular profiles coupled in the plane of their meeting faces.

According to the latter and taking into account the previous configuration of the distribution of the fastening holes of the tubular profiles, it is preferable that the fastening holes of the fastening and joining elements between contiguous tubular profiles are spaced apart from each other the same first distance that there is between fastening holes of a same face of a tubular profile or between contiguous fastening holes of two different tubular profiles and located on faces of the tubular profiles that form a same plane.

This standardised configuration of the fastening elements enables reducing the number of parts necessary for the join between tubular profiles, minimising costs and maximising the simplicity of assembly.

As an alternative to the embodiment of the flat fastening and joining elements, the fastening and joining elements between contiguous tubular profiles are formed by a part with two fixing surfaces, one associated with each of the tubular profiles to be joined, wherein these two fixing surfaces are perpendicular to each other and perform the joining of the two tubular profiles by engaging the corner formed between the meeting faces of the two tubular profiles to be joined. This configuration makes it possible to have an alternative or additional form of joint, improving the possibilities of said joints, as well as the reinforcement of the joint taking into account the direction of the stresses that said joint will receive between tubular profiles due to the movements and actions of the devices, equipment, etc., withstood by the whole of the structure and in particular of the two tubular profiles that are joined.

Similarly, in the fastening and joining elements with a single joining plane to contiguous tubular profiles, for the present embodiment of fastening and joining elements with fixing surfaces with respect to each tubular profile, perpendicular to each other, the fastening holes of the fastening and joining elements between contiguous tubular profiles are separated from each other within the same fixing surface by the same first distance as there is between fastening holes of a same face of a tubular profile and, in turn, the fastening holes located contiguously to the edges of the fastening and joining elements, are at a second distance from said edge which is half of the first distance. These edges must be understood as well as the perimeter sides, as well as the edge between the two planes that generate the 90° angle of the two fixing surfaces.

In the same way as for the configuration of the fastening and joining elements with a single plane of their joining surfaces, for this alternative configuration, standardised fastening and joining elements are created, allowing to reduce the number of parts necessary for the joining between tubular profiles, minimising costs and maximising the simplicity of assembly. According to another possible embodiment complementary to any of the above, it is necessary that at least one of the tubular profiles that are mounted as legs or support points on installation surfaces of the universal modular structure comprise a foot configured to be fixed to the fastening holes of the tubular profile and the height that the foot itself protrudes can be adjusted. This allows an adjustment of the levelling of the universal modular structure, overcoming possible installation surfaces not levelled correctly.

Optionally, the tubular profiles incorporate associated with the coupling and/or through holes of installations and/or the ends of the tubular profile for access to the hollow interior, at least one of the following auxiliary elements:
- cap;
- plugs;
- cable gland;
- electric and/or pneumatic connections; and/or
- ornamentation plates or stickers as identifying or branding colours

Optionally, one or more of these auxiliary elements are coupled on the window of the tubular profile.

Also optionally and with respect to the geometry of the section of the tubular profile, the tubular profiles of square or rectangular section are configured in different geometries, where the profiles have a base of a first measurement common to all geometries and a height of said section that is any of the following ratios:
- half of the first measurement;
- equal to the first measurement;
- 1.5 times the first measurement; or
- 2 times the first measurement.

Also preferably, the first distance between the fastening holes, both of the tubular profiles and of the fastening and joining elements, is a submultiple of the first measurement of the base of the section of the tubular profiles.

With respect to this first described aspect of the invention, it provides a modular structure of high structural and dynamic rigidity, based on large section tubular profiles and pre-stressed bolted joints, capable of maintaining its mechanical behaviour under dynamic loads and vibrations, overcoming the inherent limitations of modular systems based on thin-walled extruded aluminium profiles and avoiding non-reusable or reconfigurable welded structures.

According to a second aspect, the present invention provides a working structure for the positioning of the workpiece clamping tools. This working structure comprises surface installation supports, a universal modular structure of support and positioning of the workpiece clamping tools in connection with the installation supports of the working structure.

Advantageously, at least the universal modular structure for supporting and positioning the clamping tools is formed by a universal modular structure as described in the first aspect of the present invention.

With this configuration, it achieves:
- a structure assembly of high rigidity thanks to the tubular profiles of rectangular/quadrangular section and of structural steel, which have a high moment of inertia;
- having joining means by threaded through holes, with face-to-face contact, and that allow maintaining torque and eliminating micro-displacements in the face of severe dynamic loads.
- Eliminating/minimising the processes of creating a specific design and projects for end use,
- eliminating/minimising the actions of qualified third party professionals, avoiding actions such as machining and welding of parts and their subsequent painting/protection, since the configuration of the parts that form the assembly allows self-assembly,
- Reusing the tubular profiles in subsequent different projects, without having to carry out destructive operations in their dismantling and simply change points of attachment between profiles and coupling points of tools, consumptions of supplies, equipment, devices or the like,
- included inside the ducts, pipes, cables or similar so that they are collected and protected,
- having the structure assembly adapted to the desired project in a shorter period of time and at a lower cost than in the state of the art.

### Brief description of the drawings

For a better understanding of the description made herein, a set of drawings has been provided wherein, schematically and solely by way of a non-limiting example, a practical case of an embodiment is represented.
Figure 1 is a perspective view of possible embodiments of different standardised tubular profiles with different dimensions to be able to adapt dimensionally to the type of project to be configured and stresses to be withstood.
Figure 2 is a perspective view of possible embodiments of different fastening and joining elements standardised for the different types of joint between tubular profiles.
Figure 3 is a perspective view of possible embodiments of different joints between tubular profiles of Figure 1 with fastening and joining elements of Figure 2.
Figure 4 is a perspective view of a possible embodiment of a tubular profile of the universal modular structure where to an adjustable foot is adapted to provide it with the function of supporting the installation surface.
Figure 5 is a perspective view of different embodiments of tubular profiles with auxiliary elements coupled to provide that portion of tubular profile with a function or feature.
Figure 6 is a perspective view of an embodiment of a working structure, made with a universal modular structure.

### Description of a preferred embodiment

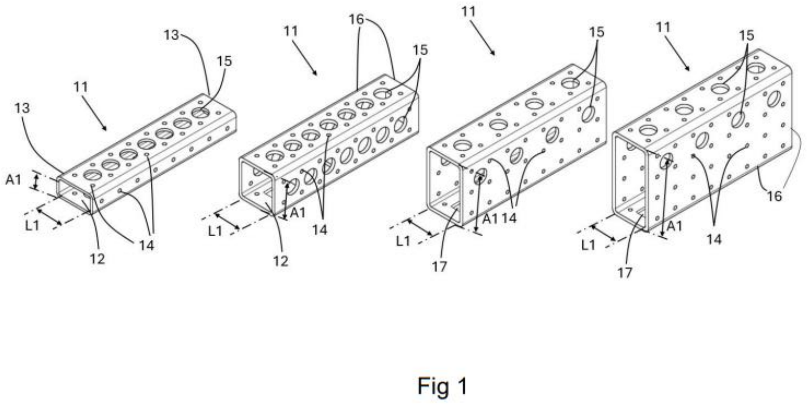

The universal modular structure of the present invention is described below with reference to figures 1 to 6.

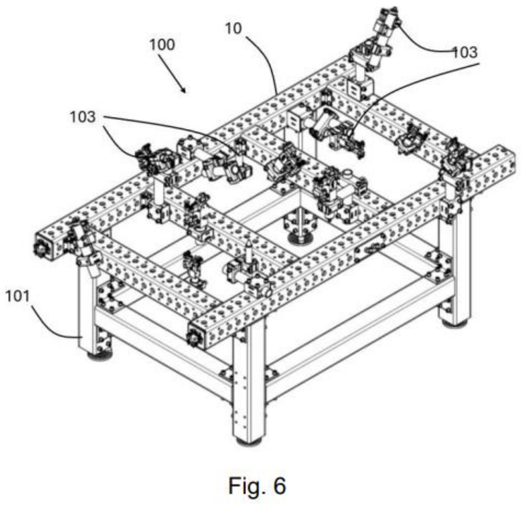

According to a preferred embodiment of the invention and as can be seen in Figures 1, 2, 3 and 6, the universal modular structure (10) is formed by tubular profiles (11) configured to be joined together by means of fastening and joining elements (20), to form a support assembly for equipment, devices or the like, as well as to position tools by way of a working structure (100), according to a possible preferred embodiment as shown in figure 6.

The tubular profiles (11) are configured by way of a tubular part, in the present embodiment of square or rectangular section, with a hollow interior and accessible both from its ends, and through openings or windows (17) in one of its faces, for the passage of ducts, pipes, wiring or other installations, as well as for the actuation on its interior.

These tubular profiles (11) comprise on several of their faces multiple fastening holes (14) configured for the joint between tubular profiles (11) of this same configuration by means of joining means formed by fastening and joining elements (20) and conventional fixing elements such as screws of properties suitable for the required conditions. These fastening holes (14) of the tubular profiles (11) have threaded bores on their perimeter surfaces that define the hole, so that they allow the direct tightening of the screws used to join contiguous tubular profiles (11), without the need for the use of complementary nuts. According to an example embodiment, these fastening holes (14), as well as the associated screws, are made in metric 10. Optionally, these joints can have a Nord-Lock washer system, as an anti-loosening system for dynamic loads.

The tubular profiles (11) also incorporate multiple coupling and/or through holes (15) on three of their four faces, allowing on these faces the coupling of connection sockets, installation channelling or other accessories related to the installations that are in their hollow interior. In this embodiment, these coupling and/or through holes (15) are homogeneously distributed along the sides of the tubular profile (11), where they are arranged (15). Other configurations of coupling and/or through holes (15) are possible, on fewer faces of the tubular profile (11) or on all of them, as well as a different distribution of these coupling and/or through holes (15) on said faces in a non-homogeneous manner.

These tubular profiles (11) are made, in the present embodiment, of cold-rolled metal material and closing the geometry of their section by welding. The material used in this embodiment, and preferably in the formation of modular structure assemblies, is structural steel, preferably more specifically, S-355 structural steel, providing the profiles, according to their dimensions and geometric configuration with high moments of inertia, from for example 6 mm steel configurations with a rectangular section of 50x100 mm that achieve moments of inertia of 179/58.7 cm4, to 8 mm steel configurations with a rectangular section of 200x100 mm that achieve moments of inertia of 2.091/705 cm4.

With respect to this preferred configuration of the tubular profiles (11), other configurations of these tubular profiles are possible with respect to other geometries, materials and possibility or not of including windows or other accessories.

By way of non-limiting example, it should be noted that the different tubular profiles (11) of square or rectangular section that are used in the present embodiment, are configured in different geometries, where the profiles have a base of a first measurement (L1) common to all geometries and a height (A1) of said section that is any of the following ratios:
- half of the first measurement (L1);
- equal to the first measurement (L1);
- 1.5 times the first measurement (L1); or
- 2 times the first measurement (L1).

In the present embodiment, 100 mm has been considered as the first measurement (L1).

As indicated, the modular structure (10) joins the tubular profiles (11) that are positioned contiguously, using fastening and joining elements (20), which also have their corresponding fastening holes (21) on the joining surfaces of said fastening and joining elements (20).

The fastening holes (14) of the tubular profiles (11) and the fastening holes (21) of the fastening and joining elements (20) are configured such that, when a fastening and joining element (20) is placed over a portion of the contiguous tubular profiles (11), the fastening holes (21) of the fastening and joining element (20) are coincident at once in one or more fastening holes (14) of each of the contiguous tubular profiles (11) to be joined.

In order to be able to standardise these fastening and joining elements (20), as well as the tubular profiles (11) that will form the structure, it is necessary that a fastening and joining element (20) can be coupled in the desired final assembly position between two tubular profiles (11), it being possible to align one or more fastening holes (14) of a first tubular profile (11) with one or more fastening holes of the fastening and joining element (20) and in turn align one or more fastening holes (14) of a second tubular profile (11) with one or more fastening holes of the same fastening and joining element (20).

To this end, the fastening holes (14) that are on the one or more faces of the tubular profile (11), are spaced apart from each other (14) at a first distance (d1) identical along the length and width of each face of the tubular profile (11), that is, along a longitudinal axis parallel to the axis of the tubular profile (11) and widthwise on an axis transversal to the tubular profile (11). In the present preferred embodiment, the first distance (d1) is 50 mm creating a 50 mm x 50 mm grid on the faces of the tubular profiles. It is to be noted that, on the faces where the measurement does not allow the grid to be made, the fastening holes (14) will be positioned aligned with each other with a separation of 50 mm as can be seen in the first example of Figure 1. This first distance (d1) is a submultiple of the first measurement (L1) of the section of the tubular profile (11) which is 100 mm, allowing the correct distribution on the faces of the tubular profile (11).

In addition to this configuration between the fastening holes (14), the fastening holes (14) which are located contiguous to the border or edge (16) of the tubular profile (11), are at a second distance (d2) from said border and/or edge (16) which is half of the first distance (d1). In this way, it is achieved that with a fastening and joining element (20) with a distribution of fastening holes (21) on its joining surface, which is identical in distances to the fastening holes (14) of the tubular profile (11), joints can be made by means of these standardised parts.

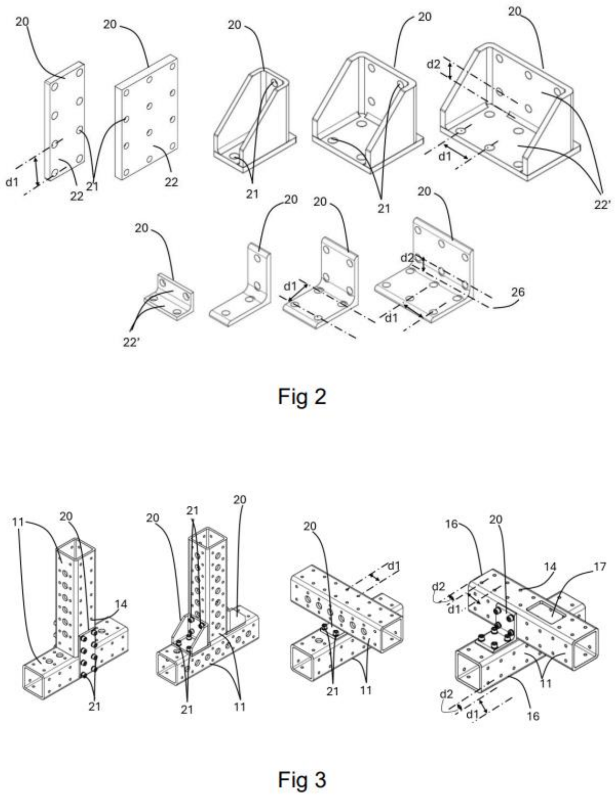

In this way, the fastening and joining elements (20) that in the present embodiment can have different shapes, as shown in figure 2, to opt for different ways of joining the tubular profiles (11), as shown in figure 3, are formed by a plate or the like with fastening holes (21) on a fixing surface (22) in a common fastening plane for the two tubular profiles (11) to be joined or by a plate or the like with two fixing surfaces with fastening holes (21) there fixing surfaces arranged in perpendicular planes, or in other inclined planes different from 90° if necessary due to the project design.

In the fastening elements (20) with a single common plane for their fixing surface (22), the fastening holes (21) are separated from each other by the same first distance (d1) that exists between fastening holes (14) of a same face of a tubular profile (11) or between contiguous fastening holes (14) of two different tubular profiles (11).

In the case of the fastening elements (20) with two fixing surfaces (22'), one associated with each of the tubular profiles (11) to be joined, wherein these two fixing surfaces (22') are perpendicular to each other and thus perform the joining of the two tubular profiles (11) coupled to their corner between meeting faces, the fastening holes (21) are separated from each other within the same fixing surface (22, 22') by the same first distance (d1) that there is between fastening holes (14) of the same face of a tubular profile (11) and, in turn, the fastening holes (21) located contiguous to the edges (26) of the fastening and joining elements (20), are at a second distance (d2) from said edge (26) that is half of the first distance (d1).

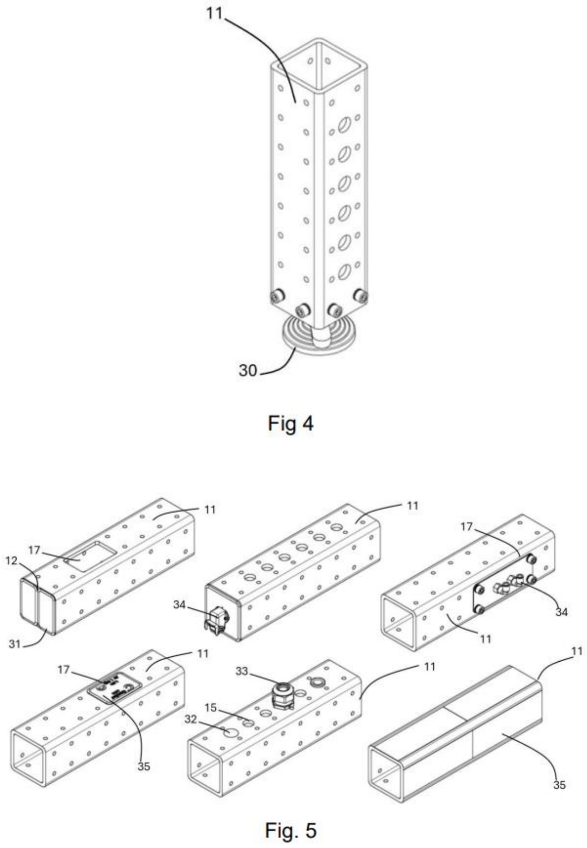

As can be seen in Figures 4 and 5, the modular structure (10) can incorporate different auxiliary elements or accessories in its tubular profiles (11) to provide greater functionality to the structure and/or complete the interior installation.

Figure 4 shows the coupling to the fastening holes (14) of a tubular profile (11) of a height-adjustable foot (30) in order to accommodate and regulate the position of this tubular profile (11) and therefore of the modular structure assembly (10) that uses this tubular profile (11) as a support point on the installation surface.

In addition, as shown in Figure 5, the tubular profiles (11) can incorporate caps (31) for access to the inside of the profile, plugs (32) for coupling and/or through holes (15), cable glands (33), electrical and/or pneumatic connections (34), as well as ornamentation plates or stickers (35) as identifying or brand colours. These elements can also be coupled, in addition to over the coupling and/or through holes (15), over the openings at the ends of the tubular profile (11) or over the intermediate access windows (17).

As can be seen in Figure 6, the universal modular structure (10) is configured as a working structure (100), which has surface installation supports (101), which can be made in the same type of tubular profile, although with fewer intermediate holes (14,15), where these supports are joined to a universal modular structure (10) for supporting and positioning the workpiece clamping tools (103).

This universal modular structure (10) allows forming a self-assembling configuration to be able to fix and position in an oriented manner the tools corresponding to the gripping devices of the workpiece in the working structure (100), obtaining all the advantages indicated above, reducing costs by more than 40% (materials, design projects, production of specific parts, grinding, machining, welding, painting and assembly by specialised professionals), reducing execution times and allowing the recovery of the individual elements that form the universal modular structure assembly (10) when you want to modify this working structure (100) and make another different configuration adapted to a new project.

Although reference has been made to specific embodiments of the invention, it is clear to a person skilled in the art that the modular structure, as well as the work bench described is susceptible to numerous variations and modifications, and that all the details mentioned can be replaced by others that are technically equivalent, without departing from the scope of protection defined by the accompanying claims.

## Claims

1. Universal modular structure, comprising tubular profiles (11) that are configured to join together to form said universal modular structure (10), as well as to receive the coupling and fixing of tools, devices, equipment or the like,
**characterised in that** that each tubular profile (11) is constituted by a tubular part of closed section, with its interior (12) hollow and accessible at least from the ends (13) of said tubular profile (11), which comprises at least:
- Multiple fastening holes (14) in at least one of the faces of the tubular profile (11) configured for receiving joining means between tubular profiles (11) and for the fixing of external elements such as tools, equipment and/or the like; and
- One or more coupling and/or through holes (15) of installations on at least one of the faces of the tubular profile (11);
wherein the universal modular structure (10) comprises fastening and joining elements (20) between contiguous tubular profiles (11), wherein these fastening and joining elements (20) comprise fastening holes (21) compatible with the fastening holes (14) of the tubular profile (11) and said fastening holes (21) are positioned on the fastening and joining element (20) in such a way that, when a fastening and joining element (20) is placed on a portion of each of the contiguous tubular profiles (11), the fastening holes (21) of the fastening and joining element (20) are coincident at the same time in one or more fastening holes (14) of each of the contiguous tubular profiles (11) to be joined.

2. Universal modular structure, according to claim 1, wherein the fastening holes (14) of the tubular profiles (11) comprise a threaded bore in their open perimeter surface, this threaded bore configured to receive a screw or the like and directly tighten the screw in said fastening hole (14).

3. Universal modular structure, according to claim 1 or 2, wherein the tubular profiles (11) forming the universal modular structure (10) are configured with a cross section of rectangular or square geometry.

4. Universal modular structure, according to any of the preceding claims, wherein the tubular profiles (11) that form the universal modular structure (10) are formed by cold-rolled and welded metal material according to its closed section.

5. Universal modular structure, according to any of the preceding claims, wherein the tubular profiles (11) that form the universal modular structure (10) are formed by metal material of the structural steel type.

6. Universal modular structure, according to any one of the preceding claims, wherein the fastening holes (14) that are located on the one or more faces of the tubular profile (11) and are spaced apart from each other (14) at a first distance (d1) identical along the length and width of each face of the tubular profile (11) where they are positioned; and wherein the fastening holes (14) that are located contiguous to the border or edge (16) of the tubular profile (11), are located at a second distance (d2) from said border and/or edge (16) that is half of the first distance (d1), the fastening holes (14) being configured on respective faces of two contiguous tubular profiles (11) that form a same plane, at the same distance as the first separation distance (d1) within the same face of the same tubular profile (11).

7. Universal modular structure, according to any of the previous claims, wherein at least one of the faces of at least one tubular profile (11) forming the universal modular structure (10) comprises an opening (17) by way of a window configured to access the hollow interior (12) of the tubular profile (11) in a portion of one of the faces of the tubular profile (11).

8. Universal modular structure, according to any of the previous claims, wherein the coupling and/or through holes (15) of installations are located along all the faces of the tubular profile (11) except one, being equally spaced between them (15) within the same face and, wherein, this face free of coupling and/or through holes (15) of installations are installed at least the fastening holes (14) and the openings by way of windows (17).

9. Universal modular structure, according to any of the preceding claims, wherein the fastening and joining elements (20) between contiguous tubular profiles (11) are formed by a plate or the like with a fixing surface (22) in a common fixing plane for the two tubular profiles (11) to be joined and thus perform the joining through fastening holes (21) in these fastening elements (20) to the two tubular profiles (11) coupled in the plane of their meeting faces.

10. Universal modular structure, according to claims 6 and 9, wherein the fastening holes (21) of the fastening and joining elements (20) between contiguous tubular profiles (11) are separated from each other by the same first distance (d1) as there is between fastening holes (14) on the same face of a tubular profile (11) or between contiguous fastening holes (14) of two different tubular profiles (11).

11. Universal modular structure, according to any of claims 1 to 8, wherein the fastening and joining elements (20) between contiguous tubular profiles (11) are formed by a part with two fixing surfaces (22'), one associated with each of the tubular profiles (11) to be joined, wherein these two fixing surfaces (22') are perpendicular to each other and perform the joining of the two tubular profiles (11) by coupling to the corner formed between the meeting faces of the two tubular profiles (11) to be joined.

12. Universal modular structure, according to claims 6 and 11, wherein the fastening holes (21) of the fastening and joining elements (20) between contiguous tubular profiles (11), are separated from each other within the same fixing surface (22, 22') by the same first distance (d1) as there is between fastening holes (14) of a same face of a tubular profile (11) and, in turn, the fastening holes (21) located contiguous to the edges (26) of the fastening and joining elements (20), are at a second distance (d2) from said edge (26) which is half of the first distance (d1).

13. Universal modular structure, according to any one of the preceding claims, wherein the tubular profiles (11) incorporate associated to the coupling and/or through holes (15) of installations, at the ends of the tubular profile (11) and/or to the window (17) of the tubular profile (11) of access to the hollow interior (12), at least one of the following auxiliary elements:
- foot (30) configured to be fixed to the fastening holes (14) of the tubular profile (11), being able to adjust the height that the foot (30) protrudes by, as a leg or support point on installation surfaces of the modular structure (10)
- cap (31),
- plugs (32);
- cable gland (33);
- electric and/or pneumatic connections (34); and/or
- ornamentation plates or stickers (35) as identifying or branding colours

14. Universal modular structure, according to any of claims 3 to 13, wherein the tubular profiles (11) of square or rectangular section are configured in different geometries, where the profiles have a base of a first measurement (L1) common to all geometries and a height (A1) of said section that is any of the following ratios:
- half of the first measurement (L1);
- equal to the first measurement (L1);
- 1.5 times the first measurement (L1); or
- 2 times the first measurement (L1); and
wherein, the first distance (d1) between the fastening holes (14,21), both of the tubular profiles (11) and of the fastening and joining elements (20), is a submultiple of the first measurement (L1) of the base of the section of the tubular profiles (11).

15. Working structure for positioning of workpiece clamping tools, wherein the work structure (100) comprises supports (101) for installation to the surface, a universal modular structure (10) for supporting and positioning the workpiece clamping tools (103) in connection with the supports (101), **characterised in that** at least the universal modular structure (10) for supporting and positioning the clamping tools (103) is formed by a universal modular structure (10) as described in claims 1 to 14.
